## Europäisches Patentamt

## European Patent Office

## Office européen des brevets

(11) Veröffentlichungsnummer: **0 338 202 B1**

# (12) EUROPÄISCHE PATENTSCHRIFT

(45) Veröffentlichungstag der Patentschrift: **14.04.93**

(51) Int. Cl.⁵: **B62D 7/14**

(21) Anmeldenummer: **89102397.0**

(22) Anmeldetag: **11.02.89**

(54) Aktives Vierrad-Lenksystem für Kraftfahrzeuge.

(30) Priorität: **19.04.88 DE 3812957**

(43) Veröffentlichungstag der Anmeldung:
**25.10.89 Patentblatt 89/43**

(45) Bekanntmachung des Hinweises auf die
Patenterteilung:
**14.04.93 Patentblatt 93/15**

(84) Benannte Vertragsstaaten:
**AT CH DE ES FR GB IT LI NL SE**

(56) Entgegenhaltungen:
**EP-A- 0 150 858       EP-A- 0 198 450
DE-A- 3 145 618       DE-A- 3 520 225
GB-A- 2 151 997       US-A- 4 706 771**

**PATENT ABSTRACTS OF JAPAN, Band 9, Nr.
117 (M-381)[1840], 22. Mai 1985; & JP-A-60
4466 (NISSAN JIDOSHA K.K.) 10-01-1985**

(73) Patentinhaber: **Dr.Ing.h.c. F. Porsche Aktiengesellschaft
Porschestrasse 42
W-7000 Stuttgart 40(DE)**

(72) Erfinder: **Berkefeld, Volker, Dr. Dipl.-Ing.
Zimmeräckerstrasse 25
W-7253 Renningen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.5x/3.0.1)

**Beschreibung**

Die Erfindung bezieht sich auf eine aktives Vierrad-Lenksystem für Kraftfahrzeuge nach dem Oberbegriff des Anspruchs 1.

Es sind Kraftfahrzeuge mit einem Vierrad-Lenksystem aus der DE-OS 31 45 618 bekannt, das lenkbare Vorder- und Hinterräder umfaßt, wobei die Hinterräder in Abhängigkeit von Fahrzustandgrößen, die gerechnet und/oder gemessen und dann einer elektrischen Steuereinheit zugeführt werden, ansteuerbar sind. Hierzu sind die Hinterräder mit einer zusätzlichen Stelleinrichtung zur Steuerung der Hinterräder verbunden, die in einen bestimmten Verhältnis zu den Vorderrädern entsprechend den aktuellen Fahrzustandsgrößen verstellbar sind.

Aufgabe der Erfindung ist es, ein Vierrad-Lenksystem der im Oberbegriff des Anspruchs 1 dargestellte Gattung zu schaffen, mit dem ein verbessertes Fahrverhalten gegenüber Fahrzeugen mit konventionellen Vorderrad-Lenksystemen erzielt wird.

Diese Aufgabe wird erfindungsgemäß durch die Merkmale des Anspruchs 1 gelöst. Weitere vorteilhafte Merkmale beinhalten die Unteransprüche.

Die mit der Erfindung erzielten Vorteile bestehen im wesentlichen in folgendem:
- Verbesserung des Fahrverhaltens bei hoher Geschwindigkeit (Stabilitätsgewinn) bzw. Verbesserung der Manövrierbarkeit bei niedrigen Geschwindigkeiten,
- präzise Reaktion des Fahrzeugs auf Lenkwinkeleingaben durch kurze Ansprechzeiten beim Aufbau von einer Querbeschleunigung,
- bessere Ausregelung von Störgrößen (Seitenwind, Fahrbahnunebenheiten) durch den Fahrer
- kein Nachdrängen bzw. Nachschwingen des Fahrzeugs nach dem Ende von Lenkmanövern,
- indirekteres Lenkverhalten bei höheren Geschwindigkeiten,
- hohe Dämpfung der Giereigenfrequenz,
- Beeinflussung der Fahrzeugreaktion nach Lastwechsel- und Bremsmanövern
- geringe Anzahl direkt zu messender Fahrzustandsgrößen.

Bewegungszustände, bei denen ein Kraftfahrzeug sich den Grenzen der Fahrstabilität nähert oder die bereits instabil ablaufen, sind im allgemeinen durch das Entstehen größerer Schwimmwinkel gekennzeichnet, so daß das Fahrverhalten des Kraftfahrzeugs stark abhängig ist von der Größe dieses Schwimmwinkels bzw. der Schwimmwinkeländerung bei instationärer Kurvenfahrt. Der Aufbau des Schwimmwinkels nach einem Lenkmanöver führt zu einer zeitlichen Verzögerung des Anstiegs der Bahnnormalbeschleunigung und damit der Kursänderung. Auf eine Lenkradänderung folgt also nicht unmittelbar die gewünschte Kursänderung. Umgekehrt führt der Abbau des Schwimmwinkels beim Übergang zur Geradeausfahrt zu Kursänderungen, obwohl der Fahrer nicht mehr lenkt. Dieser Effekt wird als "Nachdrängen" empfunden. Weiterhin ist der Schwimmwinkel ein Maß für die Stabilität des Fahrzeugs. Jede Verringerung des Schwimmwinkels ist gleichbedeutend mit einem Stabilitätsgewinn.

Die Erfindung hat sich deshalb insbesondere die Aufgabe gestellt, die Räder so einzustellen, daß der Schwimmwinkel reduziert bzw. eine Reduzierung gegen Null herbeigeführt wird. Da eine direkte Messung des Schwimmwinkels zu aufwendig ist, wird der Schwimmwinkel aus anderen Größen ermittelt, wozu das Fahrzeug bei einer stationärer Kreisfahrt betrachtet wird.

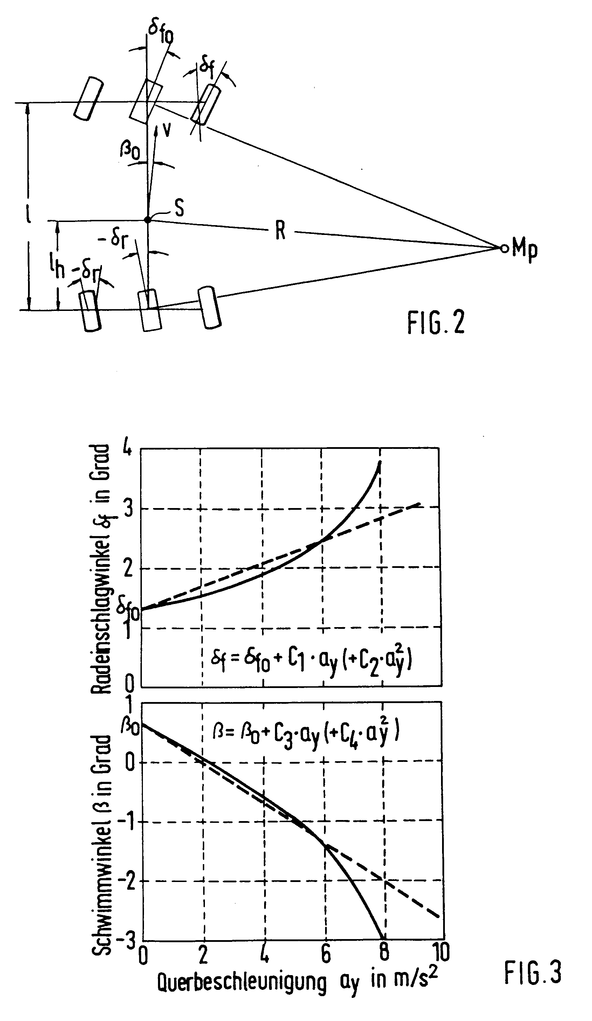

Anhand der geometrischen Beziehungen eines Fahrzeugs bei stationärer Kreisfahrt mit geringer Geschwindigkeit (Fig. 2) ergibt sich für den Radeinschlagwinkel vorn näherungsweise:

$$\delta_{fo} = (1/R) + \delta_r \qquad (1)$$

und für den Schwimmwinkel

$$\beta_o = (1_h/R) + \delta_r \qquad (2)$$

$1$: Radstand
$1_h$: Abstand HA - Bezugspunkt
$R$: Radius
$\delta_r$: Hinterradlenkwinkel
$\beta_o$: geometrischer Schwimmwinkel
$\delta_{fo}$: geometrischer Vorderradlenkwinkel

Bei höheren Geschwindigkeiten bzw. Querbeschleunigungen hängt sowohl der Vorderradeinschlagwinkel $\delta_f$ als auch der Schwimmwinkel $\beta$ vom Eigenlenkverhalten des Kraftfahrzeugs ab. Dieses Eigenlenkver-

2

EP 0 338 202 B1

halten ist in Fig. 3 über der Querbeschleunigung $a_y$ aufgetragen. Die zu messenden Kennlinien für den Radeinschlagwinkel vorn $\delta_f$ und den Schwimmwinkel $\beta$ lassen sich mit guter Genauigkeit durch Polynome 2.Grades darstellen. Da aus diesen Polynomen die Fahrzeugquerbeschleunigung $a_y$ berechnet wird soll, müssen bei der Lösung quadratische Gleichungen bestimmt werden. Als Beispiel werden die Gleichungen linearisiert (Fig. 3), so daß der Vorderradlenkwinkel $\delta_f$ aus der Gleichung

$$\delta_f = \delta_{fo} + C_1 \cdot a_y \qquad (3)$$

und der Schwimmwinkel aus der Gleichung

$$\beta = \beta_o + C_3 \cdot a_y \qquad (4)$$

berechnet wird. Es ist aber auch möglich, die quadratischen Gleichungen in einem entsprechenden Steuergerät zu verarbeiten. Der Kreisradius R, den das Fahrzeug befährt, errechnet sich näherungsweise aus der Gleichung

$$R = v^2/a_y \qquad (5)$$

Unter Verwendung der Gleichungen (1), (3) und (5) ergibt sich der Vorderradlenkwinkel für ein vierradgelenktes Fahrzeug aus

$$\delta_f = a_y \cdot ((1/v^2) + C_1) + \delta_r \qquad (6)$$

und der Schwimmwinkel aus den Gleichungen (2), (4) und (5)

$$\beta = a_y \cdot ((1_h/v^2 + C_3) + \delta_r \qquad (7)$$

Als unbekannte Größen befinden sich in den Gleichungen (6) und (7) nur noch die Querbeschleunigung $a_y$ und die Hinterradlenkwinkel $\delta_r$. Die Fahrgeschwindigkeit v steht als gemessenes Signal zur Verfügung, und der Vorderradeinschlagwinkel $\delta_f$ wird z.B. über einen Lenkradwinkelfühler gemessen.

Unter der Voraussetzung, daß der Schwimmwinkel $\beta$ auf 0 Grad reduziert wird, erhält man für die Querbeschleunigung

$$a_y = \frac{\delta_f}{\dfrac{1 - 1_h}{v^2} + C_1 - C_3} \qquad (8)$$

und für den Hinterradlenkwinkel

$$\delta_r = - \left( \frac{1_h}{v^2} + C_3 \right) \cdot a_y \qquad (9)$$

In den Funktionswandlern werden die Querbeschleunigung $a_y$ und der Hinterradlenkwinkel $\delta_r$ aus den Gleichungen (8) und (9) aus den Eingangsgrößen Fahrgeschwindigkeit v und Vorderradeinschlagwinkel $\delta_f$ errechnet.

Desweiteren ist nach der Erfindung ein Übersetzungsverhältnis k von Hinterrad- zu Vorderradeinschlagwinkel über der Fahrzeuggeschwindigkeit v darstellbar, wobei im Geschwindigkeitsbereich von mehr als 55 km/h die Hinterräder gleichsinnig einschlagen, wodurch das Lenkverhalten des Fahrzeugs indirekter wird. Dagegen schlagen die Hinterräder bei niedriger Geschwindigkeit gegensinnig zu den Vorderrädern ein und verbessern die Manövrierbarkeit des Fahrzeugs.

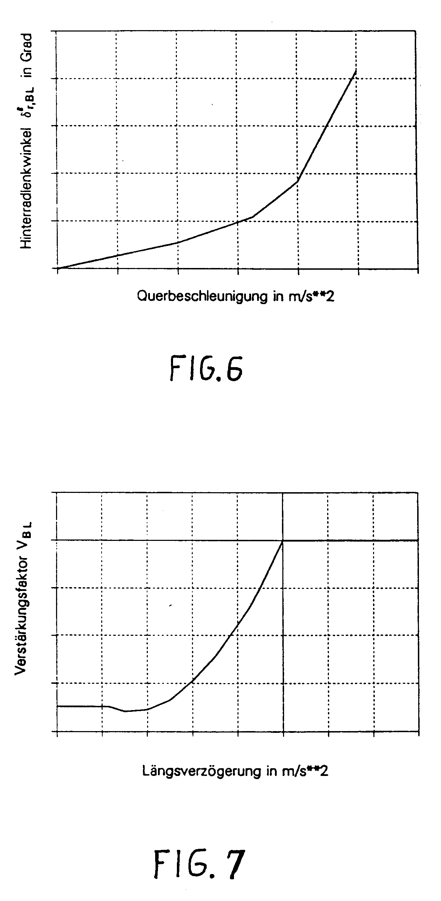

Über die Einstellung der Lenkwinkel an den Hinterrädern kann die Fahrzeugreaktion bei den Fahrmanövern Lastwechsel und Bremsen aus stationärer Kreisfahrt beeinflußt werden. Diese Fahrzeugreaktion ist

3

abhängig von der aktuellen Querbeschleunigung und Längsverzögerung (Fig. 6 und 7). Die Querbeschleunigung ist bereits aus der Gleichung (8) bekannt, während die Längsverzögerung durch Differenzieren der Fahrzeuggeschwindigkeit bestimmt wird.

Anhand der Kennlinie Fig. 6 wird zunächst ein zusätzlicher Hinterradwinkel $\delta'_{r,BL}$ in Abhängigkeit von der Querbeschleunigung bestimmt. Dieser Lenkwinkel wird mit einem Verstärkungsfaktor $V_{BL}$ (Fig. 7) in Abhängigkeit von der Längsverzögerung multipliziert. Es entsteht ein wirksamer Hinterradlenkwinkel

$$\delta_{r,wirk.} = \delta_r + V_{BL} \cdot \delta'_{r,BL}$$

der sich aus der Summe der Hinterradlenkwinkel für Quer- und Längsdynamik zusammensetzt.

Es hat sich bei einem Verstellen der Hinterräder zu den Vorderrädern in Abhängigkeit von ermittelten Fahrzustandsgrößen u.a. gezeigt, daß bei kleinen Radien und niedrigen Geschwindigkeiten das Fahrzeug mit Vierradlenkung direktere Lenkeigenschaften hat. Dagegen muß bei großen Radien und hoher Geschwindigkeiten mit indirekteren Lenkeigenschaften gerechnet werden. Für den Fahrer bedeutet dies, daß bei hoher Geschwindigkeit nicht mehr so vorsichtig gelenkt werden muß und daß das Fahrzeug auf Lenkwinkeleingaben weniger heftig reagiert.

Von Vorteil auf das Fahrverhalten des Fahrzeugs wirkt sich die Vierradlenkung auch bei Fahrspurwechseln aus, denn Lenkradwinkeländerungen und Kursänderungen sind mit geringstem Zeitverzug gekoppelt. Das Fahrzeug reagiert gegenüber Fahrzeugen mit Vorderradlenkung spontan. Die Phasenwinkel der Giergeschwindigkeit und Querbeschleunigung sind nahezu identisch, die Fahrzeugdrehung erfolgt also gleichzeitig mit der Kursänderung, wogegen bei nur konventionellen vorderradgelenkten Fahrzeugen eine Kursänderung der Lenkradwinkeländerung nachläuft.

Bei einem Lastwechsel während der Kreisfahrt weist ein Fahrzeug mit Vorderradlenkung über den gesamten Querbeschleunigungsbereich positive Giergeschwindigkeitsdifferenzen auf. Es dreht in nachteiliger Weise in den Kreis hinein. Ein Vergleichsfahrzeug mit Vierradlenkung verhält sich bis zu einer relativ hohen Querbeschleunigung neutral. Bei höheren Querbeschleunigungen ist dieses Fahrzeug ebenfalls übersteuernd. Ein Gegenlenken mit der Hinterachse ist nicht mehr ausreichend, weil das Kraftschlußpotential ausgenutzt ist. Die Gierreaktion wird jedoch erheblich reduziert. Bis zu einer relativ hohen Querbeschleunigung bewegt sich das vierradgelenkte Fahrzeug exakt auf der Sollbahn. Die anderenfalls übliche Lastwechselreaktion wird kompensiert.

Bei einem Bremsen des Fahrzeugs während der Kreisfahrt wird durch die Vierradlenkung sowohl die Stabilität als auch die Kurshaltung erheblich verbessert. Es läßt sich nicht nur die Fahrzeugreaktion während des Bremsvorgangs reduzieren, sondern es sind auch höhere Bremsverzögerungen während der Kurvenfahrt erreichbar. Da das Fahrzeug mit Vorderradlenkung infolge des Bremsmanövers den Bahnradius verringert, entstehen höhere Querbeschleunigungen, die zu einem Überbremsen des kurveninneren Vorderrads führen. Das Fahrzeug verliert seine Lenkbarkeit und dreht aus den Kreis heraus.

Durch eine gezielte zeitliche Verzögerung infolge Zwischenschaltung eines sogenannten Totzeitgliedes, wird in vorteilhafter Weise erreicht, daß entweder das Eingangssignal Lenkradwinkel vorn oder das Eingangssignal Querbeschleunigung zeitlich verzögert dem entsprechenden Funktionswandler zugeführt wird, wodurch der Hinterradlenkwinkel zeitlich verzögert zum Vorderradlenkwinkel realisiert wird.

Da die Längsverzögerung der Lastwechselreaktion voreilt, muß der Wert für die Längsverzögerung zeitlich verzögert werden. Hierzu ist ein Tiefpaßfilter vorgesehen, dem das Eingangssignal der Längsverzögerung zugeführt wird. Dieser Tiefpaßfilter sorgt für eine sanfte Gegenlenkbewegung der Hinterachse und vermeidet eine abrupte Verstellung der Hinterräder.

Ein Ausführungsbeispiel der Erfindung ist in den weiteren Darstellungen gezeigt und wird in folgenden weiter erläutert.

Es zeigen:

Fig. 1      Blockschaltbild für ein Fahrzeug mit einem Vierrad-Lenksystem,

Fig. 2      eine Darstellung der geometrischen Beziehung eines Fahrzeugs bei stationärer Kreisfahrt,

Fig. 3      ein Kennlinien-Diagramm über das Eigenlenkverhalten in Abhängigkeit von der Querbeschleunigung,

Fig. 4      ein Diagramm eines Übersetzungsverhältnisses von Hinterrad- zu Vorderradeinschlagwinkel in Abhängigkeit von der Fahrgeschwindigkeit

Fig. 5      ein schematisches Blockschaltbild für das elektronische Steuersystem der Vierradlenkung.

Fig. 6      ein Kennlinien-Diagramm über einen zusätzlichen Hinterradlenkerwinkel bei Brems- und Lastwechselmanövern als Funktion der Querbeschleunigung und

Fig. 7      ein Kennlinien-Diagramm des Verstärkungsfaktors bei Brems- und Lastwechselmanövern als Funktion der Längsverzögerung.

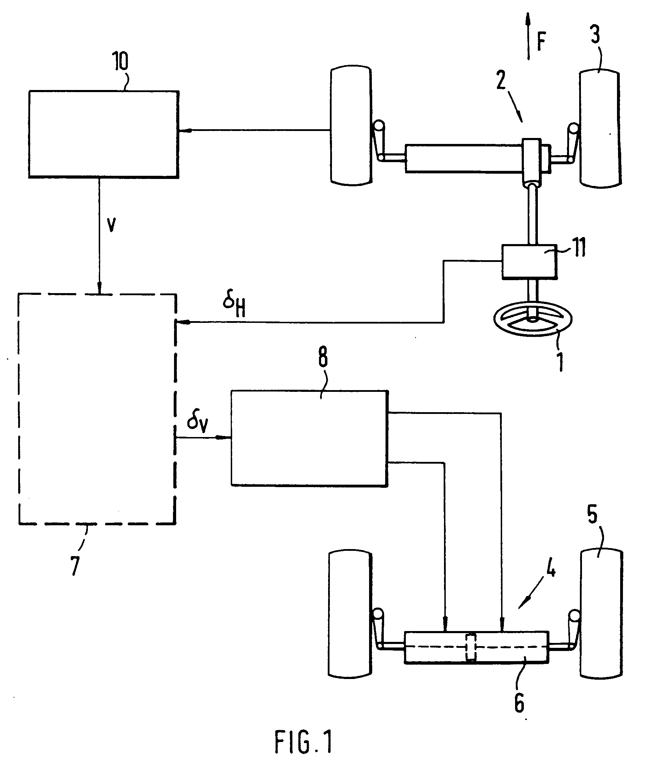

Das in Fig. 1 schematisch dargestellte Kraftfahrzeug umfaßt über eine vom Lenkrad 1 betätigte Lenkeinrichtung 2 für die Vorderräder 3. Eine weitere elektro-hydraulische Lenkeinrichtung 4 ist zwischen den Hinterrädern 5 vorgesehen. Diese Lenkeinrichtung 4 umfaßt im wesentlichen eine hydraulische Stelleinrichtung, bestehend aus einem ventilgesteuerten Stellzylinder 6, der über Spurstangen mit den Rädern 3 verbunden ist. Eine Ansteuerung des Stellzylinders 6 zum Verstellen der Hinterräder 5 erfolgt in Abhängigkeit von ermittelten Fahrzeugzustandsgrößen, die einer elektronischen Steuereinheit 7, wie z.B. einem Bordrechner, zugeführt werden. Dieser errechnet Sollwerte für den Lenkwinkel $\delta_r$ der Hinterräder 5, welche einer hydraulischen Steuereinheit 8 zugeführt werden, die den zur Verstellung der Hinterräder 5 notwendigen Arbeitsdruck für die Stellzylinder 6 über eine Pumpe erzeugt.

Im Betriebszustand des Fahrzeugs werden über einen Fahrzeuggeschwindigkeitsfühler 10 und einem Lenkradwinkelfühler 11 entsprechende Istwerte gemessen, die als Eingangssignale Fahrzeuggeschwindigkeit v und Lenkradwinkel $\delta_H$ einem ersten Funktionswandler 12 der Steuereinheit 7 zugeführt werden. Anhand dieser gemessenen Größen v und $\delta_H$ wird unter der Voraussetzung, daß z.B. der Schwimmwinkel $\beta$ = 0 ist, die aktuelle Querbeschleunigung $a_y$ nach der Gleichung (8) im Steuergerät berechnet. Zu dieser Berechnung wird die geometrische Beziehung eines Fahrzeugs (Fig. 2) und das Eigenlenkverhalten des Fahrzeugs (Fig. 3) bei stationärer Kurvenfahrt gemäß der Gleichungen (1) bis (5)) berücksichtigt. Die aus den vorgenannten Gleichungen (1) bis (5) im Funktionswandler (12) errechnete Querbeschleunigung $a_y$ geht als ein Eingangssignal mit dem weiteren Eingangssignal über die Fahrgeschwindigkeit v in einen zweiten Funktionswandler 13 des Steuergerätes ein, in dem der Hinterradlenkwinkel $\delta_r$ gemäß der Gleichung (9) in Abhängigkeit von der Fahrgeschwindigkeit v und dem Vorderradeinschlagwinkel $\delta_f$ programmiert und berechnet wird.

Zur Berücksichtigung einer Fahrgeschwindigkeitsänderung, wie Beschleunigung, $-a_x$ oder einer Längsverzögerung $a_x$ wird das errechnete Ausgangssignal über die Querbeschleunigung $a_y$ mit einem weiteren Signal aus der Fahrgeschwindigkeitsänderung $a_x$ oder $-a_x$ einem dritten Funktionswandler 14 des Steuergeräts 7 zugeführt. Dieses Eingangssignal $a_y$ errechnet im Funktionswandler 12 und die Eingangssignale $-a_x$ oder $a_x$ errechnet im Funktionswandler 14 werden in ein Ausgangssignal zusätzlichen Hinterrad-Lenkwinkel $\delta_{r,zus.}$ umgewandelt, das dem Ausgangssignal $\delta_r$ des zweiten Funktionswandlers 13 überlagert wird. Die Summe dieser Ausgangssignale $\delta_r$ und $\delta_{r,zus.}$ werden als Lenkwinkelsignal $\delta_{r,wirk.}$ der Steuereinheit 8 zur Ansteuerung der hydraulischen Lenkeinrichtung 6 für die Hinterräder 5 zugeführt.

Zur Erhöhung der Stabilität eines Kraftfahrzeugs sollte der Schwimmwinkel $\beta$ reduziert werden, wozu im ersten Funktionswandler 12 und im zweiten Funktionswandler 13 ein Hinterrad-Lenkwinkel $\delta_r$ erzeugt wird, der im Schwerpunkt S des Fahrzeugs einen Schwimmwinkel $\beta$ = 0 bewirkt bzw. einen Schwimmwinkel bewirkt, der gegen $\beta$ = 0 verringerbar ist.

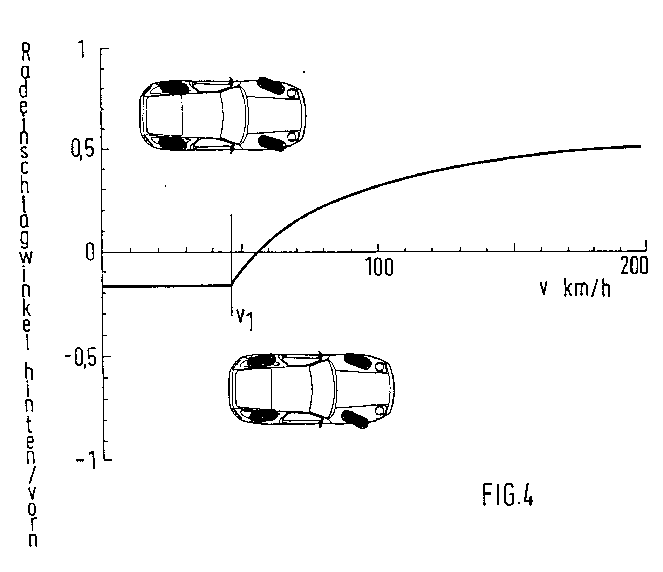

Wie Fig. 4 zeigt, soll bis zu einer vorbestimmten niederen Geschwindigkeit $v_1$ ein konstantes Übersetzungsverhältnis k der Lenkwinkel $\delta_r$ und $\delta_f$ von hinten zu vorn bei einem gegensinnigen Radeinschlag einstellbar sein. Ab dieser vorbestimmten Geschwindigkeit $v_1$ soll ein geschwindigkeitsabhängiges Übersetzungsverhältnis k der Lenkwinkel hinten zu vorn bei gleich- und gegensinnigem Radeinschlag einstellbar sein.

Vorzugsweise ist vorgesehen, wie auch Fig. 4 näher zeigt, daß bis zu einer Geschwindigkeit von etwa v = 12 m/s das konstante Übersetzungsverhältnis von etwa k = -0,18 eingestellt wird. Ab Geschwindigkeiten von etwa 15 m/s sollen die Hinterräder gleichsinnig zu den Vorderrädern einschlagen, da hierdurch ein indirekteres und stabileres Lenkverhalten des Fahrzeugs erzielt wird.

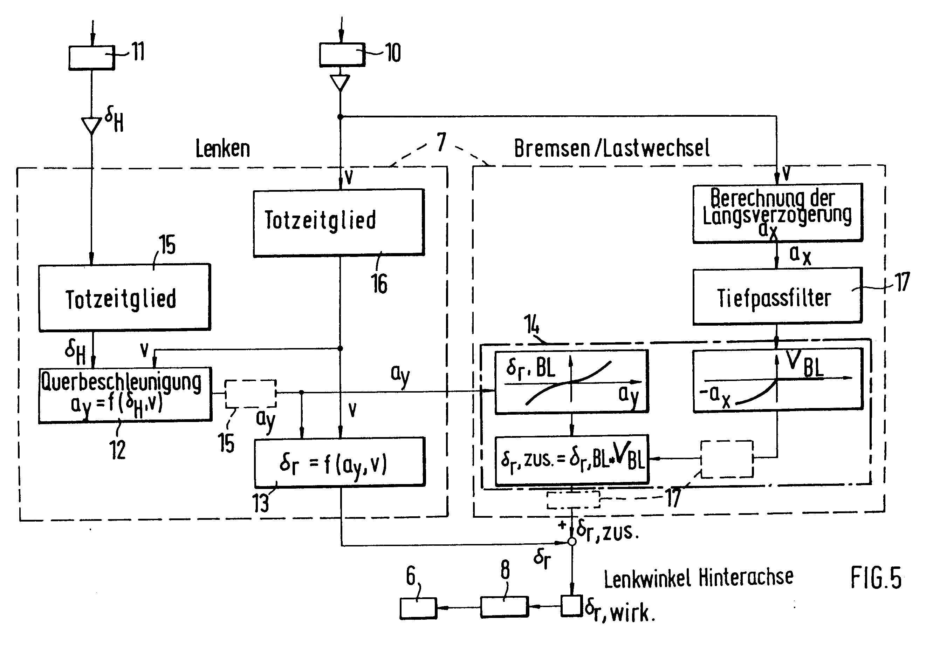

Zur zeitlich verzögerten Verstellung des Einschlagwinkels $\delta_{r,wirk.}$ an den Hinterrädern 5 gegenüber den Vorderrädern 3 ist dem ersten Funktionswandler 12 ein sogenanntes Totzeitglied 15 nachgeschaltet, wobei dieses nachgeschaltete Totzeitglied 15 in Fig. 5 gestrichelt eingezeichnet ist. Durch dieses Totzeitglied 15 wird das Ausgangssignal der Querbeschleunigung $a_y$ zeitlich verzögert dem zweiten Funktionswandler 13 und dem dritten Funktionswandler 14 zugeführt. Mit entsprechender Wirkung kann das Totzeitglied 15, wie in ausgezogenen Linien in Fig. 5 dargestellt, auch vor dem ersten Funktionswandler 12 vorgesehen sein. Dem zweiten Funktionswandler 13 wird das Geschwindigkeitssignal v über die aktuelle Geschwindigkeit vom Geschwindigkeitsfühler 10 über das Totzeitglied 16 mit einer zeitlichen Verzögerung bzw. einer Totzeit $\delta_T$ zugeführt.

Da die Längsverzögerung einer Lastwechselreaktion voreilt und hierdurch in nachteiliger Weise eine Verstellung der Hinterräder vor der eigentlichen Lastwechselreaktion erfolgt, muß diese Mitteilung des Eingangssignals $a_x$ oder $-a_x$ an den dritten Funktionswandler 14 zeitlich verzögert abgegeben werden. Hierzu durchläuft das Signal $a_x$ oder $-a_x$ einen Tiefpaßfilter 17 zweiter oder höherer Ordnung. Dieser Tiefpaßfilter 17 kann vor oder hinter dem dritten Funktionswandler 14 angeordnet sein, wie in strichpunktierten, gestrichelten und ausgezogenen Linien in Fig. 5 gezeigt ist.

EP 0 338 202 B1

**Patentansprüche**

1. Aktives Vierrad-Lenksystem für Kraftfahrzeuge, mit einer ersten über ein Lenkrad betätigbaren Lenkeinrichtung für die Vorderräder und einer zweiten Lenkeinrichtung für die Hinterräder, welche in Abhängigkeit von ermittelten Fahrzustandsgrößen, die einer elektronischen Steuereinheit, insbesondere einem Bordrechner zugeführt werden, ansteuerbar und in einem variablen Radeinschlagwinkelverhältnis zu den Vorderrädern einstellbar sind, dadurch gekennzeichnet, daß Eingangssignale über den Lenkradwinkel ($\delta_H$) von einem Lenkrad-Winkelfühler (11) über die Fahrzeug-Geschwindigkeit (v) von einem Geschwindigkeitsfühler (10) einem ersten Funktionswandler (12) der elektronischen Steuereinheit (7) zugeführt werden, der ein erstes Ausgangssignal für die Querbeschleunigung ($a_y$) erzeugt, das als ein Eingangssignal mit dem weiteren Eingangssignal der Fahrzeuggeschwindigkeit (v) einem zweiten Funktionswandler (13) zugeführt wird, der ein zweites Ausgangssignal für Hinterrad-Lenkwinkel ($\delta_r$) erzeugt und dieses Signal an eine hydraulische Steuereinheit (8) mit einer ventilgesteuerten Stelleinrichtung (6) abgegeben wird.

2. Lenksystem nach Anspruch 1, dadurch gekennzeichnet, daß das Ausgangssignal der Querbeschleunigung ($a_y$) des ersten Funktionswandlers (12) als ein Eingangssignal für einen dritten Funktionswandler (14) dient, dem ein weiteres Eingangssignal aus der Fahrzeuggeschwindigkeitsänderung (Beschleunigung -$a_x$ und Längsverzögerung $a_x$) zugeführt wird und diese Eingangssignale Querbeschleunigung ($a_y$) und Fahrzeuggeschwindigkeitsänderung (-$a_x$) bzw. ($a_x$) in ein Ausgangssignal zusätzlicher Hinterrad-Lenkwinkel ($\delta_{r,zus.}$) umgewandelt wird, das dem zweiten Ausgangssignal ($\delta_r$) überlagert wird und die Summe dieser Ausgangssignale und ($\delta_r$ und $\delta_{r,zus.}$) als Lenkwinkelsignal ($\delta_{r,wirk.}$) der elektronischen Steuereinheit (7) zur Ansteuerung der Hinterräder (5) zugeführt wird.

3. Lenksystem nach den Ansprüchen 1 oder 2, dadurch gekennzeichnet, daß der erste und zweite Funktionswandler (12 und 13) als Ausgangssignal einen Hinterrad-Lenkwinkel ($\delta_r$) abgibt, der einen im Schwerpunkt (S) des Fahrzeugs einstellenden Schwimmwinkel von ($\beta$ = 0) darstellt.

4. Lenksystem nach den Ansprüchen 1 oder 2, dadurch gekennzeichnet, daß der erste und zweite Funktionswandler (12 und 13) als Ausgangssignal einen Hinterrad-Lenkwinkel ($\delta_r$) derart abgibt, daß sich ein im Schwerpunkt (S) des Fahrzeugs gegen $\beta$ = 0 verringerbarer Schwimmwinkel ($\beta$) einstellt.

5. Lenksystem nach Anspruch 1, dadurch gekennzeichnet, daß bei einem Geschwindigkeits-Eingangssignal (v) an den ersten und zweiten Funktionswandler (12 und 13) bis zu einer vorbestimmten Geschwindigkeit ($v_1$) ein konstantes Übersetzungsverhältnis der Lenkwinkel ($\delta_r$ und $\delta_f$) und hinten zu vorn bei gegensinnigem Radeinschlag einstellbar ist und ab dieser vorbestimmten Geschwindigkeit ($v_1$) ein geschwindigkeitsabhängiges Übersetzungsverhältnis (k) der Lenkwinkel ($\delta_r$ und $\delta_f$) und hinten zu vorn bei gleich- und gegensinnigem Radeinschlag einstellbar ist (Fig. 4).

6. Lenksystem nach Anspruch 1, dadurch gekennzeichnet, daß bei einem Geschwindigkeits-Eingangssignal an den ersten und zweiten Funktionswandler (12 und 13) bis zu einer vorbestimmten Geschwindigkeit von etwa (v = 12 m/s) ein konstantes Übersetzungsverhältnis der Radeinschlagwinkel von etwa (k = -0,18) mit dem gegensinnigen Radeinschlagswinkel der Räder (3, 5) vorn zu hinten vorgegeben ist.

7. Lenksystem nach einem oder mehreren der vorhergehenden Ansprüche, dadurch gekennzeichnet, daß der Einschlagwinkel ($\delta_{r,wirk.}$) am Hinterrad (5) zeitlich verzögert zum Vorderrad (3) verstellbar ist, derart, daß das erste Ausgangssignal der Querbeschleunigung ($a_y$) zeitverzögert dem zweiten und dritten Funktionswandler (13 und 14) zugeführt wird.

8. Lenksystem nach Anspruch 7, dadurch gekennzeichnet, daß dem ersten und zweiten Funktionswandler (12, 13) das Geschwindigkeitssignal (v) vom Geschwindigkeitsfühler (10) über das Totzeitglied (16) mit einer Zeitverzögerung (Totzeit $\delta_T$) zuführbar ist.

9. Lenksystem nach einem oder mehreren der vorhergehenden Ansprüche, dadurch gekennzeichnet, daß das Signal ($a_x$ bzw. -$a_x$) einen Tiefpaßfilter (17) mit einem Zeitverhalten zweiter oder höherer Ordnung durchläuft.

6

**10.** Lenksystem nach einem oder mehreren der vorhergehenden Ansprüche, dadurch gekennzeichnet, daß das Ausgangssignal ($\delta_{r,zus.}$) des dritten Funktionswandlers (14) einen Tiefpaßfilter (17) mit einem Zeitverhalten zweiter oder höherer Ordnung durchläuft.

## Claims

**1.** An active four-wheel steering system for motor vehicles, comprising a first steering device, operable via a steering wheel, for the front wheels and a second steering device for the rear wheels which may be controlled in dependence on determined driving condition values fed to an electronic control unit, more particularly an on-board computer, and which are adjustable in a variable angle of wheel lock ratio to the front wheels, characterised in that input signals from a steering wheel angle sensor (11) relating to the steering wheel angle ($\delta_H$) and from a speed sensor (10) relating to the vehicle speed (v) are supplied to a first function converter (12) of the electronic control unit (7) which produces a first output signal for the transverse acceleration ($a_y$), this being supplied as an input signal with the further input signal of the vehicle speed (v) to a second function converter (13) which produces a second output signal for the rear wheel steering angle ($\delta_r$), and this signal is passed to a hydraulic control unit (8) with a valve-controlled adjustment device (6).

**2.** A steering system according to claim 1, characterised in that the output signal of transverse acceleration ($a_y$) of the first function converter (12) serves as an input signal for a third function converter (14) to which is supplied a further input signal derived from the vehicle speed change (acceleration $-a_x$ and longitudinal deceleration $a_x$), and these input signals of transverse acceleration ($a_x$) and vehicle speed change ($-a_x$ or $a_x$) [are] converted into an additional rear wheel steering angle output signal ($\delta_{r,zus.}$) which is superimposed on the second output signal ($\delta_r$), and the sum of these output signals ($\delta_r$ and $\delta_{r,zus.}$) is supplied as the steering angle signal ($\delta_{r,wirk.}$) to the electronic control unit (7) for controlling the rear wheels (5).

**3.** A steering system according to claims 1 or 2, characterised in that the first and the second function converter (12 and 13) [give] as output signal a rear wheel steering angle ($\delta_r$) which represents a floating angle of ($\beta$ = 0) occuring at the centre of gravity (S) of the vehicle.

**4.** A steering system according to claims 1 or 2, characterised in that the first and the second function converter (12 and 13) [give] as output signal a rear wheel steering angle ($\delta_r$) such that a floating angle ($\beta$) occurs which may be reduced towards $\beta$ = 0 at the centre of gravity (S) of the vehicle.

**5.** A steering system according to claim 1, characterised in that with a speed input signal (v) supplied to the first and second function converters (12 and 13), up to a preset speed ($v_1$) a constant transmission ratio of the steering angles ($\delta_r$ and $\delta_f$) rear to front is adjustable with wheel lock in the opposite direction, and from this preset speed ($v_1$) upwards a speed-dependent transmission ratio (k) of the steering angles ($\delta_r$ and $\delta_f$) rear to front is adjustable with wheel lock in the same and in the opposite direction (Fig. 4).

**6.** A steering system according to claim 1, characterised in that with a speed input signal supplied to the first and second function converters (12 and 13), up to a preset speed of about (v = 12 m/s) a constant transmission ratio of the angle of wheel lock of about (k = -0.18) is preset front to rear with the angle of wheel lock of the wheels (3, 5) being in opposite directions.

**7.** A steering system according to one of more of the preceding claims, characterised in that the angle of lock ($\delta_{r,wirk.}$) at the rear wheel (5) may be adjusted so as to be time-delayed in relation to the front wheel (3), so that the first output signal of transverse acceleration ($a_v$) is supplied, time-delayed, to the second and third function converters (13 and 14).

**8.** A steering system according to claim 7, characterised in that the speed signal (v) from the speed sensor (10) may be supplied to the first and second function converters (12, 13) via the lag element (16) with a time delay (lag $\delta_T$).

**9.** A steering system according to one or more of the preceding claims, characterised in that the signal ($a_x$ or $-a_x$) passes through a low pass filter (17) with a time response of the second or higher order.

**10.** A steering system according to one or more of the preceding claims, characterised in that the output signal ($\delta_{r,zus.}$) of the third function converter (14) passes through a low pass filter (17) with a time response of the second or higher order.

**Revendications**

**1.** Système actif de direction sur les quatre roues pour véhicules automobiles, comportant un premier dispositif de direction, à actionner au moyen d'un volant pour les roues avant et un deuxième dispositif de direction pour les roues arrière qui est commandé, en fonction de grandeurs d'état déterminées de la chaussée lesquelles sont envoyées à une unité de commande électronique en particulier à un ordinateur de bord et qui peuvent être réglées dans un rapport variable d'angle de braquage des roues, par rapport aux roues avant, caractérisé en ce que des signaux d'entrée relatifs à l'angle de braquage ($\delta_H$) sont envoyés par un capteur d'angle de braquage (11) et des signaux d'entrée relatifs à la vitesse du véhicule (v) sont envoyés par un capteur de vitesse (10) à un premier convertisseur de fonction (12) de l'unité de commande (7) électronique, lequel fournit un premier signal de sortie pour l'accélération transversale ($a_y$), qui est envoyé sous la forme d'un signal d'entrée avec l'autre signal d'entrée de la vitesse du véhicule (v), à un deuxième convertisseur de fonction (13) qui fournit un second signal de sortie pour l'angle de braquage des roues arrière ($\delta_r$) et ce signal est délivré à une unité de commande (8) hydraulique avec un dispositif de réglage (6) commandé par une soupape.

**2.** Système de direction selon la revendication 1, caractérisé en ce que le signal de sortie de l'accélération transversale ($a_y$) du premier convertisseur de fonction (12) sert de signal d'entrée à un troisième convertisseur de fonction (14) auquel est envoyé un autre signal d'entrée provenant de la variation de la vitesse du véhicule (accélération -$a_x$ et ralentissement longitudinal $a_x$) et ces signaux d'entrée accélération transversale ($a_y$) et variation de la vitesse du véhicule (-$a_x$) ou ($a_x$), sont convertis en un signal de sortie angle de braquage des roues arrière supplémentaire ($\delta_{r,\,zus.}$) lequel est superposé au deuxième signal de sortie ($\delta_r$) et la somme de ces signaux de sortie ($\delta_r$ et $\delta_{r,\,zus.}$) est envoyée, en tant que signal d'angle de braquage ($\delta_{r,\,wirk.}$) à l'unité de commande (7) électronique pour commander les roues arrière (5).

**3.** Système de direction selon les revendications 1 ou 2, caractérisé en ce que le premier et le deuxième convertisseurs de fonction (12 et 13) délivrent, comme signal de sortie, un angle de braquage des roues arrière ($\delta_r$) qui représente un angle de flottement de $\beta$ = 0 s'établissant au centre de gravité (S) du véhicule.

**4.** Système de direction selon les revendications 1 ou 2, caractérisé en ce que le premier et le deuxième convertisseurs de fonction (12 et 13) délivrent, comme signal de sortie un angle de braquage des roues arrière ($\delta_r$) de manière qu'il s'établisse au centre de gravité (S) du véhicule, un angle de flottement ($\beta$) diminuant vers $\beta$ = 0.

**5.** Système de direction selon la revendication 1, caractérisé en ce que dans le cas d'un signal d'entrée de vitesse (v) sur le premier et le deuxième convertisseurs de fonction (12 et 13) jusqu'à une vitesse ($v_1$) prédéterminée, il est possible de régler un rapport de démultiplication constant des angles de braquage ($\delta_r$ et $\delta$ ), de l'arrière à l'avant, en cas de braquage des roues en sens contraire et en ce qu'à partir de cette vitesse ($v_1$) prédéterminée, il est possible de régler un rapport de démultiplication (k), dépendant de la vitesse, des angles de braquage ($\delta_r$ et $\delta$ ), de l'arrière vers l'avant dans le cas d'un braquage des roues dans le même sens et en sens contraire (figure 4).

**6.** Système de direction selon le revendications 1, caractérisé en ce que dans le cas d'un signal d'entrée de vitesse au premier et au deuxième convertisseurs de fonction (12 et 13), jusqu'à une vitesse prédéterminée d'environ (v = 12 m/s), il est donné un rapport de démultiplication constant des angles de braquage des roues d'environ (k = -0,18) avec l'angle de braquage en sens contraire des roues (3, 5) de l'avant vers l'arrière.

**7.** Système de direction selon une ou plusieurs des revendications précédentes, caractérisé en ce que l'angle de braquage ($\delta_{r,\,wirk.}$) sur la roue arrière (5) est réglable, de manière temporisée, par rapport à la roue avant (3), de telle sorte que le premier signal de sortie de l'accélération transversale ($a_y$) est envoyé, avec une temporisation, au deuxième et au troisième convertisseurs de fonction (13 et 14).

**8.** Système de direction selon la revendication 7, caractérisé en ce que le signal de vitesse (v) est envoyé au premier et au deuxième convertisseurs de fonction (12, 13), par le capteur de vitesse (10), par l'intermédiaire de l'organe de temps mort (16), avec une temporisation (temps mort $\delta$ ).

**9.** Système de direction selon une ou plusieurs des revendications précédentes, caractérisé en ce que le signal ($a_x$ ou -$a_x$) traverse un filtre passe-bas (17) avec un comportement de temps de deuxième ordre ou d'un ordre supérieur.

**10.** Système de direction selon une ou plusieurs des revendication précédentes, caractérisé en ce que le signal de sortie ($\delta_r$, $_{zus.}$) du troisième convertisseur de fonction (14) traverse un filtre passe-bas (17) avec un comportement dans le temps de deuxième ordre ou d'ordre supérieur.

FIG.1

FIG. 2

$$\delta_f = \delta_{f0} + C_1 \cdot a_y \, (+ C_2 \cdot a_y^2)$$

$$\beta = \beta_0 + C_3 \cdot a_y \, (+ C_4 \cdot a_y^2)$$

Querbeschleunigung $a_y$ in m/s²

FIG. 3

FIG.4

Bremsen/Lastwechsel

Berechnung der
Längsverzögerung
$a_X$

Tiefpassfilter

$V_{BL}$

$-a_X$

17

$\delta_{r,BL}$

$a_y$

$\delta_{r,zus.} = \delta_{r,BL} \cdot V_{BL}$

14

17

Lenken

10

$V$

Totzeitglied

16

$a_y$

$V$

$\delta_r = f(a_y, v)$

$a_y$

15

13

11

$\delta_H$

Totzeitglied

15

$v$

Querbeschleunigung
$a_y = f(\delta_H, v)$

$\delta_H$

12

7

$+\ \delta_{r,zus.}$

$\delta_r$

Lenkwinkel Hinterachse

$\delta_{r,wirk.}$

8

6

FIG.5

13

FIG. 6

FIG. 7